(19) **Europäisches Patentamt**

**European Patent Office**

**Office européen des brevets**

(11) **EP 1 030 154 B1**

(12) **EUROPEAN PATENT SPECIFICATION**

(45) Date of publication and mention
of the grant of the patent:
**06.04.2005 Bulletin 2005/14**

(51) Int Cl.⁷: $F28D\ 3/02$, $F28D\ 3/04$, $B01D\ 1/04$

(21) Application number: **00300596.4**

(22) Date of filing: **27.01.2000**

(54) **Heat exchanger of the type of a falling-film evaporator having refrigerant distribution system**

Wärmetauscher des Typs Berieselungsverdampfer mit Kühlmittelverteilungssystem

Echangeur de chaleur du type d'un évaporateur à film tombant avec un système de distribution de réfrigérant

(84) Designated Contracting States:
**DE ES FR GB IT**

(30) Priority: **16.02.1999 US 250916**

(43) Date of publication of application:
**23.08.2000 Bulletin 2000/34**

(73) Proprietor: **CARRIER CORPORATION**
**Syracuse New York 13221 (US)**

(72) Inventor: **Gupte, Neelkanth S.**
**Liverpool, New York 13090 (US)**

(74) Representative: **Leckey, David Herbert et al**
**Frank B. Dehn & Co.,**
**European Patent Attorneys,**
**179 Queen Victoria Street**
**London EC4V 4EL (GB)**

(56) References cited:
**EP-A- 0 699 886**    **US-A- 3 332 469**
**US-A- 5 645 124**

## Description

### Technical Field

This invention is directed to a horizontal shell-and-tube heat exchanger according to the preamble of claim 1. Such a heat exchanger is known from US- A-5 645 124.

### Background Art

In the horizontal shell-and-tube falling-film heat exchangers of vapor compression chillers, the heat exchanging fluid is sprayed on the top of the first layer of tubes forming the tube assembly, with the use of spray nozzles. In these situations, a staggered tube pitch is normally used. The staggered tube pitch tends to cause larger pressure drops on the vapor side of the tube, as the vapor moves up through the stack, particularly with vapor compression chillers. To rectify this, manufactures will use liberal tube pitches in order to reduce the pressure drop. This results in a larger shell diameter leading to a higher cost for equipment. Additionally, in order to arrange tubes in an in-line pattern so as to minimize the pressure drop penalty, other manufacturers use complicated dripper distribution systems which are heavily susceptible to machine leveling and costly in design and structure. An additional problem occurs in two phase refrigerant distribution, wherein the spray nozzles used often do not provide a uniform liquid distribution, leading to inferior heat exchanger performance. An additional weakness of staggered tube bank layout is that available fluid flow is distributed over a larger number of tubes. This leads to a relatively lower film flow rate and a lower local recirculation rate (defined as film flow rate divided by vapor production rate), increasing the potential for dry-out and significant reduction in heat transfer coefficients. An in-line tube bank arrangement allows to operate at a higher film flow rate to improve the above mentioned weakness. However, while doing so, it is possible that certain portion of distributed liquid may not reach heat transfer surface, an object of improvement for the present invention.

An example of a recent falling film evaporator design, having a refrigerant distribution system, is shown in US Patent 5,645,124. Several embodiments of refrigerant distributors are shown in this patent, the preferred one uses a mesh screen interface between a distributor and the tubes and another with a tube-in-tube arrangement for distributing the refrigerant onto the screen and heat exchange tube assembly.

As shown in FIG. 7, the refrigerant travels through and inner tube and is released through a top orifice into an outer tuber. The refrigerant drips down the sides of the inner tube through a bottom opening onto the screen and then the evaporator tube. An alternative evaporator tube design is shown whereas instead of a true cylindrical structure, the tube includes a V-point on the bottom surface for directing the drips of refrigerant onto the under-positioned evaporator tube. In another embodiment, along with the v-point, the evaporator tube includes a pooling area for collecting and then distributing the refrigerant for a more controlled distribution.

The mesh screen is placed in touch with or in close proximity to the top most evaporator tubes of the tube assembly. The mesh screen is corrugated or waved, forming peaks and valleys, such that each valley is generally parallel with and located directly above the longitudinal axis of one of the upper most evaporator tubes. In this manner, pools of liquid refrigerant grow axially along the valleys of the screen until gravity overcomes the surface attraction force which suspends the liquid refrigerant on the mesh screen surface. The refrigerant then falls and drops onto the upper most evaporator tubes. When the screen is touching the tubes, the refrigerant flows onto the tube. While the use of the screens may minimize refrigerant splashing and the amount of refrigerant sucked into the compressor, the screen acts as a substantial impediment to the flow of refrigerant to the evaporator tubes.

There exists a need therefore, for an improved refrigerant distribution system for a falling-film heat exchangers, which system allows for an in-line tube pattern, uniform distribution of the refrigerant and minimal pressure drop over the evaporator tubes.

### Disclosure of Invention

The primary object of this invention is to provide an improved distribution system for falling-film heat exchangers.

Another object of this invention is to provide an improved distribution system for falling-film heat exchangers, wherein an in-line heat exchanger tube system can be used with a simple distribution system, thereby decreasing pressure drop and improving refrigerant distribution efficiency.

Still another object of this invention is to provide an improved refrigerant distribution system for a falling-film heat exchanger, wherein spray nozzles are used for distribution and a mechanism is provided for accurately directing the refrigerant to the in-line stacked heat exchanger tubes for efficient distribution of the refrigerant.

Still another object of this invention is to provide an improved refrigerant distribution system for a falling-film heat exchanger having increased local film flow rates by using in-line tube banks, wherein local recirculation rate (defined as film flow rate divided by vapor production rate) is increased to improve wettability and heat transfer coefficients.

The foregoing objects and advantages set forth herein are achieved by the horizontal shell-and-tube heat exchanger according to claim 1. The system includes an inline heat exchanger tube bank operating in a falling-film evaporation mode, including a plurality of unstaggered rows of heat exchanger tubes, wherein the rows are substantially vertically aligned with spaces separating the rows, and a supply for providing refrigerant. At least one distribution mechanism in fluid communication with the supply and having a refrigerant exit in proximity to the plurality of rows of heat exchanger tubes is provided with a plurality of baffles positioned at the refrigerant exit. Each of the baffles is in substantial alignment with one of the spaces, extending over the one of the spaces to direct refrigerant from the exit of the distribution mechanism, away from the one of spaces and onto the substantially vertical aligned rows of heat exchanger tubes.

## Brief Description of the Drawings

FIGS. 1a is a frontal schematic view of the spray distribution system and heat exchanger of the present invention, using distributor baffles and an in-line tube bank in accordance with the principles of the present invention;

FIG. 1b is a side view taken along line 1b-1b of FIG 1a;

FIG. 2 is a schematic representation of a staggered tube bank, for a heat exchanger design of the prior art;

FIG. 3a is an enlarged frontal of the baffles of the spray distribution system shown in FIG. 1; and

FIG. 3b is an enlarged side view taken along line 3b-3b of FIG 3a, of the baffles of the spray distribution system shown in FIG. 1.

## Best Mode for Carrying Out the Invention

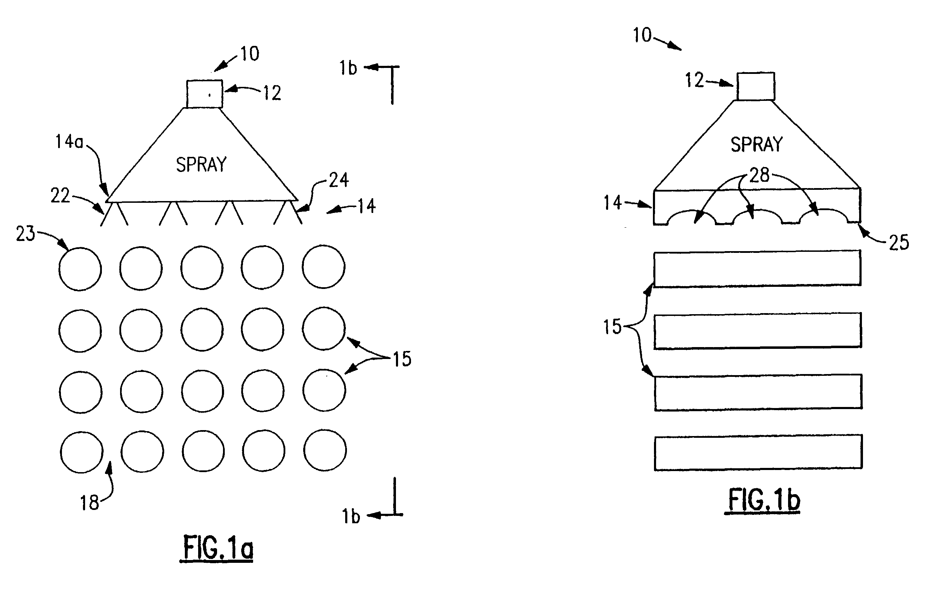

Referring to FIG. 1, a schematic representation of the preferred embodiment of the improved refrigerant distribution system of the present invention is shown, which is designated generally as 10. The system generally includes spray nozzles 12, baffles 14, and a tube bank 15.

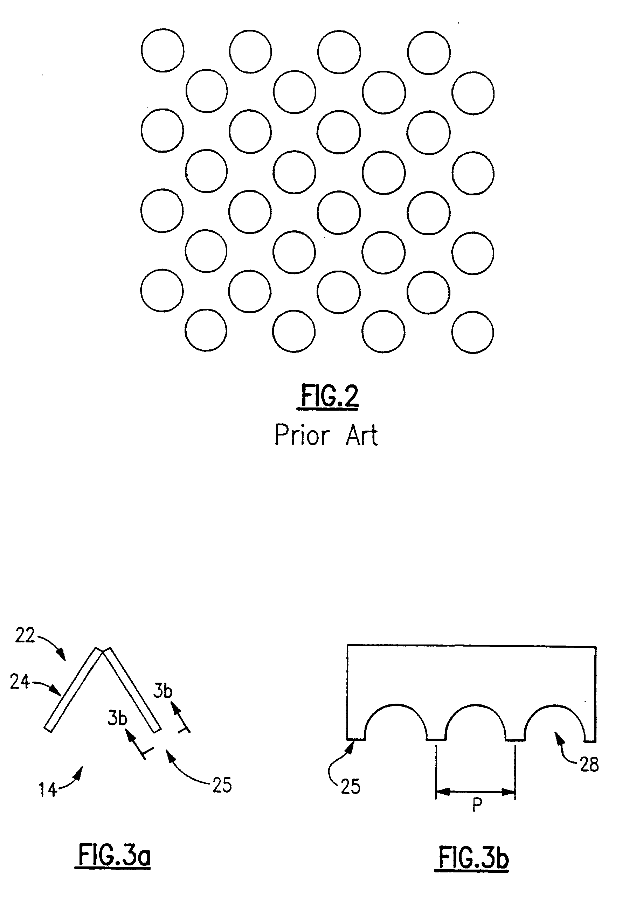

Spray nozzles 12 are designed and function in a manner known in the art, and spray refrigerant downwardly on the heat exchange tube system, arranged in a vertically aligned, non-staggered manner. As shown in FIG. 1, each spray nozzle 12 covers an area of spray A, over which area a refrigerant is sprayed downwardly onto the heat exchanger tubes. In a typical arrangement, and with the heat exchanger tubes 16 in a non-staggered positioning, refrigerant would flow in substantial volume between the spaced apart heat exchanger tubes, thereby effecting the efficiency of the tube coverage by the available refrigerant. This is typically the reason why a staggered heat exchanger tube arrangement is used, which staggered arrangement is shown, for example, in FIG. 2. In this manner, any refrigerant falling between heat exchanger tubes is used by the next row of tubes, which are offset in a staggered manner from the previous and subsequent rows. However, as indicated in the background section, the staggered arrangements suffer from an undesirable pressure drop, among the other things described.

In accordance with the principles of the present invention, baffles 14 are provided at the edge of the spray nozzles 12, and are spaced such that they are positioned over the spaces between heat exchanger tubes. That is, with the heat exchanger tubes arranged in the preferred un-staggered, vertically stacked manner, the baffles 14 are aligned with the spaces between the heat exchanger tubes such as, for example, baffle 14a over space 18. To facilitate directing the refrigerant toward the heat exchanger tubes between which each baffle is placed, the baffle preferably has a chevron shape, having a narrow or pointed end up toward the spray nozzles, such that the legs 22 of the baffles, and surfaces 24 thereof, are pointed substantially towards the longitudinal upper surface center 23 of the two heat exchanger tubes between which the chevron shaped baffle is positioned. In addition, the bottom edge 25 of each baffle is serrated, as shown in FIG. 3, such that the serrations face the in-line tube stacks, as shown. In the preferred embodiment, the distance between the tips 26 of the serrations 28 is a predetermined pitch P. The pitch P is selected to be less than the natural pitch of the refrigerant, measured as it drips in liquid columns from the horizontal tubes of the heat exchanger. The natural pitch of the liquid column is given by the following equation,

$$(1) \qquad 2*\pi*[(2*sigma)/(rho*g)]^{0.5},$$

where,

**sigma** = surface tension,
**rho** =liquid refrigerant density, and
**g** = acceleration due to gravity.

In one embodiment, the preferred pitch of the tips of the serrations will be in the range of sixty to eighty five percent (60-85%), and more particularly seventy five percent (75%) of the value determined by equation (1). However, the type of refrigerant used and other factors, including the type of chiller and other equipment used, may effect the optimum percentage chosen. In all cases, the pitch of the serrations should be less than the value determined by Equation (1). By having the pitch of the serrations less than the natural pitch of the liquid column, quick distribution of the liquid refrigerant is facilitated. In addition, the serrations provide passage for vapor to escape the tube bank without significant pressure drop, which would otherwise cause reduction in suction pressure and reduction in chiller efficiency.

In operation, as refrigerant is sprayed downwardly from the nozzles, the refrigerant which exits the nozzles in alignment or on a collision course with spaces 18, flows down the back edge 24 of legs 22 of baffle 14, over the edge 25 and through the serrations 28 and is directed to the top center 23 of the surrounding heat exchanger tubes. Refrigerant then flows around the heat exchanger tubes, over the outside surface of the tube until it reaches the under surface of the tube and gravity breaks the surface bond between the refrigerant and the tube to cause the remaining, non-vaporized refrigerant to move to the underlying heat exchanger tubes. While a chevron shaped baffle is shown, it is possible that other shapes can be used such c-shaped, v-shaped and half octagonal shaped, to name a few.

The primary advantage of this invention is than an improved distribution system is provided for falling-film heat exchanger. Another advantage of this invention is that an improved distribution system is provided for falling-film heat exchanger, wherein an in-line heat exchanger tube system can be used with a simple distribution system, thereby decreasing pressure drop and improving refrigerant distribution efficiency. Still another advantage of this invention is that an improved refrigerant distribution system is provided for falling-film heat exchanger, wherein spray nozzles are used for distribution and a mechanism is provided for accurately directing the refrigerant to the in-line stacked heat exchanger tubes for efficient distribution of the refrigerant. Still another advantage of this invention is that an improved distribution system is provided which uses an in-line tube bank and exhibits increased film flow rate and local recirculation rate of distributed fluid.

**Claims**

1. A horizontal shell-and-tube heat exchanger having a falling-film evaporator and refrigerant distribution system, comprising:

   an inline heat exchanger tube bank operating in a falling-film evaporation mode, including a plurality of unstaggered rows of heat exchanger tubes, wherein said rows are substantially vertically aligned with spaces separating the rows; a supply for providing refrigerant; at least one refrigerant distribution mechanism in fluid communication with said supply and having a refrigerant exit in proximity to said plurality of rows of heat exchanger tubes; and **characterized by** a plurality of baffles positioned at said refrigerant exit,

   wherein each of said baffles is in substantial alignment with one of said spaces, extending over said one of said spaces to direct refrigerant from said exit of said distribution mechanism and away from said one of spaces and to the substantially vertical aligned rows of heat exchanger tubes.

2. The heat exchanger according to claim 1, wherein each of said baffles has a wide end and a narrow end, said narrow end positioned closest to said refrigerant exit.

3. The heat exchanger according to claim 2, wherein said baffles are chevron shaped for directing the refrigerant to the heat exchanger tubes.

4. The heat exchanger according to claim 2 or 3, wherein said baffles have a serrated surface for contacting the refrigerant exiting said refrigerant distribution mechanism.

5. The heat exchanger according to claim 4, wherein said serrated surface includes a plurality of serrations extending in the direction of refrigerant flow from said refrigerant distribution mechanism

6. The heat exchanger according to claim 5, wherein said refrigerant flows off said tubes in liquid columns having a natural pitch and wherein each of said plurality of serrations has a tip the distance between the tips of the serrations being a predetermined pitch smaller in size than said natural pitch.

7. The heat exchanger according to claim 6, wherein said predetermined pitch has a size in the range of 60-80% of said natural pitch.

8. The heat exchanger according to claim 7, wherein said predetermined pitch is 75% of said natural pitch.

9. The heat exchanger according to any preceding claim, wherein said refrigerant is a low surface tension refrigerant.

10. The heater exchanger, according to any preceding claim, wherein said distribution mechanism comprises a system of spray nozzles.

**Patentansprüche**

1. Horizontaler Röhrenwärmetauscher mit einem Berieselungsverdampfer und einem Kühlmittelverteilungssystem, aufweisend; eine Inline-Wärmetauscherröhrenbank, welche in einem Berieselungsverdampfungsmodus arbeitet und welche eine Mehrzahl von ungestaffelten Reihen von Wärmetauscherröhren aufweist, wobei die Reihen im wesentlichen vertikal ausgerichtet sind, wobei Zwischenräume die Reihen separieren; eine Versorgung zum Zuführen von Kühlmittel ; wenigstens einen Kühlmittelverteilungsmechanismus, welcher in Fluidkommunikation mit der Versorgung ist und welcher einen Kühlmittelauslass in der Nähe der Mehrzahl von Reihen von Wärmetauscherröhren hat;
**gekennzeichnet durch**
eine Mehrzahl von Leitblechen, welche an dem Kühlmittelauslass positioniert sind, wobei jedes der Leitbleche im wesentlichen in Ausrichtung mit einem der Zwischenräume ist, sich über dem einen der Zwischenräume erstreckt, um Kühlmittel von dem Auslass des verteitungsmechanismus und weg von dem einen der Zwischenräume und hin zu der im wesentlichen vertikal ausgerichteten Reihe von Wärmetauscherröhren zu führen.

2. Wärmetauscher nach Anspruch 1, wobei jedes der Leitbleche ein breites Ende und ein schmales Ende hat, wobei das schmale Ende am nächsten zu dem Kühlmittelauslass positioniert ist.

3. Wärmetauscher nach Anspruch 2, wobei die Leitbleche zum Führen des Kühlmittels zu den Wärmetauscherröhren winkelförmig sind.

4. Wärmetauscher nach Anspruch 2 oder 3, wobei die Leitbleche eine gezahnte Oberfläche zum Kontaktieren des den Kühlmittelverteilungsmechanismus verlassenden Kühlmittels haben.

5. Wärmetauscher nach Anspruch 4, wobei die gezahnte Oberfläche eine Mehrzahl von Zähnen aufweist, welche sich von dem Kühlmittelverteilungmechanismus in Richtung der Kühlmittelströmung erstrecken.

6. Wärmetauscher nach Anspruch 5, wobei das Kühlmittel von den Röhren in Flüssigkeitskolonnen abfließt, welche einen natürlichen Zwischenabstand haben, und wobei jede der Mehrzahl von Zähnen eine Spitze hat, wobei der Abstand zwischen den Spitzen der Zähne ein vorbestimmter Zwischenabstand ist, der kleiner ist als der natürliche Zwischenabstand.

7. Wärmetauscher nach Anspruch 6, wobei der vorbestimmte Zwischenabstand eine Größe im Bereich von 60 bis 80 % des natürlichen Zwischenabstands hat.

8. Wärmetauscher nach Anspruch 7, wobei der vorbestimmte Zwischenabstand 75% des natürlichen Zwischenabstands ist.

9. Wärmetauscher nach einem der vorhergehenden Ansprüche, wobei das Kühlmittel ein Kühlmittel geringer Oberflächenspannung ist.

10. Wärmetauscher nach einem der vorangehenden Ansprüche, wobei der Verteilungmechanismus ein System von Sprühdüsen aufweist.

## Revendications

1. Echangeur de chaleur tubulaire horizontal ayant un évaporateur à ruissellement et un système de distribution de réfrigérant, comprenant:

   un banc de tubes d'échangeur de chaleur en ligne travaillant dans un mode évaporation à ruissellement, comprenant une pluralité de rangées non échelonnées de tubes d'échangeur de chaleur dans lequel lesdites rangées sont alignées de manière sensiblement verticale avec des espaces séparant les rangées, une alimentation pour fournir le réfrigérant, au moins un mécanisme de distribution du réfrigérant en communication de fluide avec ladite alimentation et ayant une sortie de réfrigérant à proximité de ladite pluralité de rangées de tubes d'échangeur de chaleur, **caractérisé par**
   une pluralité de baffles positionnées à ladite sortie de réfrigérant dans lequel chacune desdites baffles se trouve sensiblement alignée par rapport à un desdits espaces, s'étendant par-dessus ledit espace choisi parmi lesdits espaces pour diriger le réfrigérant à partir de ladite sortie dudit mécanisme de distribution, en s'éloignant dudit espace choisi et vers les rangées à alignement sensiblement vertical des tubes d'échangeur de chaleur.

2. Echangeur de chaleur selon la revendication 1, dans lequel chacune desdites baffles a une extrémité large et une extxémité étroite, ladite extrémité étroite étant positionnée au plus près de ladite sortie de réfrigérant.

3. Echangeur de chaleur selon la revendication 2, dans lequel lesdites baffles sont des baffles à chevron pour diriger le réfrigérant vers les tubes de l'échangeur de chaleur.

4. Echangeur de chaleur selon la revendication 2 ou 3, dans lequel lesdites baffles ont une surface dentelée pour le contact avec le réfrigérant sortant dudit mécanisme de distribution de réfrigérant.

5. Echangeur de chaleur selon la revendication 4, dans lequel ladite surface dentelée comprend une pluralité de dentelures s'étendant dans la direction du flux de réfrigérant venant dudit mecanisme de distribution de réfrigérant.

6. Echangeur de chaleur selon la revendication 5, dans lequel ledit réfrigérant s'écoule desdits tubes dans des colonnnes de liquide ayant un pas naturel et dans lequel chacune de ladite pluralité de dentelures a une pointe, la distance entre les pointes des dentelures étant un pas prédéterminé plus petit que ledit pas naturel.

7. Echangeur de chaleur selon la revendication 6, dans lequel ledit pas prédéterminé a une taille dans le domaine de 60-80% dudit pas naturel.

8. Echangeur de chaleur selon la revendication 7, dans lequel ledit pas prédeterminé vaut 75% dudit pas naturel.

9. Echangeur de chaleur selon l'une quelconque des revendications précédentes, dans lequel le réfrigérant est un réfrigérant à basse tension superficielle.

10. Echangeur de chaleur selon l'une quelconque des revendications précédentes, dans lequel ledit mécanisme de distribution comprend un système de pulvérisation.

SPRAY

FIG.1b

SPRAY

FIG.1a

**FIG.2**

Prior Art

**FIG.3a**

**FIG.3b**